# EUROPÄISCHE PATENTSCHRIFT

(11) **EP 1 311 015 B1**
(45) Veröffentlichungstag und Bekanntmachung des Hinweises auf die Patenterteilung: **16.07.2008**
(21) Anmeldenummer: 02025168.2
(22) Anmeldetag: 11.11.2002
(51) Int. Cl.: H01M 8/06, H01M 8/04

(54) **Brennstoffzellenanlage und Verfahren zum Betrieb dieser Anlage**
Fuel cell unit and method for operating said unit
Dispositif de piles à combustible et procédé d'utilisation de ce dispositif

(30) Priorität: 12.11.2001 DE 10155193
(43) Veröffentlichungstag der Anmeldung: 14.05.2003
(73) Patentinhaber: Viessmann Werke GmbH & Co KG, 35107 Allendorf (DE)
(72) Erfinder: Britz, Peter, Dr., 35108 Allendorf (DE)
(74) Vertreter: Wolf, Günter

(56) Entgegenhaltungen:
- US-A- 4 004 947
- US-A- 5 308 456

## Beschreibung

Die Erfindung betrifft eine Brennstoffzellenanlage gemäß dem Oberbegriff des Anspruchs 1 sowie ein Verfahren zum Betrieb dieser Anlagen gemäß dem Anspruch 5.

Brennstoffzellenanlagen der genannten Art sind beispielsweise aus der DE 198 17 534 A1 oder der US 4 004 947 bekannt. Zum Betrieb einer sogenannten PEM-Brennstoffzelle (Brennstoffzelle mit Polymerelektrolytmembran) wird dieser einerseits Wasserstoff und andererseits Sauerstoff zugeführt. Durch die Polymerelektrolytmembran gelangen die Wasserstoffprotonen zum Sauerstoff. Dabei entsteht zum einen Wasser und zum anderen ein zwischen den Polen der Brennstoffzelle anliegendes Spannungspotential. Die Leistungsdichte des sogenannten Brennstoffzellenstacks hängt dabei insbesondere vom Feuchtegehalt der der Kathodenseite der Brennstoffzelle zugeführten Luft ab, da die Membran nur bei einem exakt definierten Feuchtegrad die optimale Menge an Wasserstoffprotonen zur Kathodenseite des Stacks passieren läßt. Ist die Membran zu trocken, steigt der elektrische Innenwiderstand der Brennstoffzelle an, ist die Membran dagegen zu feucht, kommt es kathodenseitig zu einer Beeinträchtigung der sogenannten Flowfieldstruktur und damit zur Verstopfung der Protonenkanäle. Aus diesem Grund wird bei der Luftzufuhr zur Brennstoffzelle stets genau der Feuchtegehalt der Luft überwacht bzw. eingestellt. Hierzu werden unterschiedliche Befeuchtungskonzepte verwendet. Bei einem wird beispielsweise die zuzuführende Luft mittels eines Gebläses zur Vorheizung auf die Prozesstemperatur zu einem Wärmetauscher geleitet, der gleichzeitig für die Befeuchtung der Luft sorgt (sogenannter Feuchte-Wärmetauscher).

Problematisch an diesen an sich einwandfrei funktionierenden Befeuchtungsvorrichtungen ist, dass sie den Gesamtwirkungsgrad der Brennstoffzellenanlage verringern, da zur Befeuchtung der Luft energieverbrauchende Gasbefeuchter und zum Lufttransport auch Gasförder erforderlich sind.

Der Erfindung liegt die Aufgabe zugrunde, bei einer Brennstoffzellenanlage der eingangs genannten Art die Befeuchtung der Kathodenluft zu vereinfachen und auf diese Weise den Gesamtwirkungsgrad der Anlage zu steigern.

Diese Aufgabe ist mit einer Brennstoffzellenanlage der eingangs genannten Art vorrichtungsmäßig durch die im Kennzeichen des Anspruchs 1 und verfahrensmäßig durch die im Kennzeichen des Anspruchs 5 aufgeführten Merkmale gelöst.

Der Erfindung liegt also im Kern die Idee zugrunde, den im ohnehin feuchten Abgas des Gasbrenners stets vorhandenen Restsauerstoff der Kathodenseite der Brennstoffzelle zuzuführen, um so auf eine aufwendige Luftförderung und -befeuchtung verzichten zu können. Das bei guter Verbrennung zumindest brennstoffzellengiftfreie Abgas wird also unmittelbar dem Brennstoffzellenstack zugeführt. Der im Abgas enthaltene Sauerstoffanteil verbrennt mit den durch die feuchte Membran strömenden Wasserstoffprotonen, die übrigen Bestandteile des Abgas verhalten sich gegenüber dem Brennstoffzellenprozess inert und verlassen diese über den sonst für die befeuchtete Luft vorgesehenen Abfuhranschluss.

Da das Abgas auch nach Passage der Abgasführung in der Regel eine höhere Temperatur hat als für den Betrieb der Brennstoffzelle erforderlich bzw. günstig, ist an der Abgasführung ein Rauchgaswärmetauscher vorgesehen, d.h. mittels dieses Wärmetauschers wird das etwa 900° C heiße Abgas auf für die Brennstoffzelle günstige Temperatur von etwa 90° C heruntergekühlt, wobei die anfallende Wärme beispielsweise zur Vorheizung der Reformer-Edukte (Kohlenwasserstoffgas und Wasser) genutzt werden kann und somit dem Prozess nicht verloren geht (siehe hierzu die [noch unveröffentlichte] DE 100 57 537 A1). Bei der Abkühlung des Abgases im Rauchgaswärmetauscher ergibt sich dabei im übrigen durch die Abgaskondensation ein taupunktangepaßter Feuchtegehalt, der bestens geeignet ist, um die Membran der Brennstoffzelle feucht zu halten.

Falls die Menge an Restsauerstoff im Abgas für den Betrieb der Brennstoffzelle nicht ausreichen sollte, ist darüber hinaus bei einer vorteilhaften Ausführungsform vorgesehen, einen Gasbrenner einzusetzen, der auch bei größeren Luftzahlen arbeitet, d.h. einen Brenner einzusetzen, bei dem das Verhältnis zwischen zugeführter Luft und Gas hin zu einem größeren (für die eigentliche Verbrennung eigentlich nicht erforderlichen) Luftanteil einstellbar ist.

Schließlich ist ebenfalls für den Fall, dass der Luftanteil im Abgas für den Brennstoffzellenbetrieb nicht ausreichend und der Feuchtegehalt im Abgas eventuell sogar zu hoch sein sollte, vorgesehen, dass der zur Zufuhr von Sauerstoff vorgesehene Anschluss an der PEM-Brennstoffzelle neben der Verbindung zur Abgasführung auch mit einer weiteren Sauerstoffquelle verbunden ist, d.h. es kann weiterer Sauerstoff bzw. weitere Luft auf herkömmliche Weise der Brennstoffzelle zur Verfügung gestellt werden. Als Sauerstoffquelle kommt dabei beispielsweise ein dem Bedarf angepaßter und somit entsprechend verkleinerter Luftförder in Betracht, wie sie bei den Brennstoffzellenanlage gemäß dem Stand der Technik (siehe oben) verwendet werden.

Die erfindungsgemäße Brennstoffzellenanlage einschließlich ihrer vorteilhaften Weiterbildungen gemäß der abhängigen Ansprüche wird nachfolgend anhand der zeichnerischen Darstellung eines Ausführungsbeipsiels genauer erläutert.

Die in der einzigen Figur dargestellte Brennstoffzellenanlage besteht einerseits aus einen Apparat 1 zur Erzeugung von Wasserstoff. Dieser Apparat 1 besteht seinerseits aus einem Reformer 2 zur Umwandlung von Kohlenwasserstoffgas und Wasser in Wasserstoff und weitere Reformer-Produkte mit nachgeschalteten Gasreinigungsstufen 3, wobei ein mit einer Abgasführung 4 versehener Gasbrenner 5 zur Beheizung des Reformers 2 vorgesehen ist. Andererseits besteht die Anlage aus einer sogenannten PEM-Brennstoffzelle 6 mit mindestens einem Anschluss 7 zur Zufuhr von Sauerstoff und mit mindestens einem Anschluss 8 zur Zufuhr des im Apparat 1 erzeugten Wasserstoffs.

Wesentlich für diese Anlage ist nun, dass die Abgasführung 4 des Gasbrenners 5 mit dem an der PEM-Brennstoffzelle 6 vorgesehenen Anschluss 7 zur Zufuhr von Sauerstoff verbunden ist.

Wie eingangs erläutert, ist es auf diese Weise möglich, im Abgas enthaltenen Sauerstoff für den Betrieb der Brennstoffzelle 6 zu nutzen, und zwar verbunden mit dem Vorteil, dass mit dem nach einer entsprechenden Abkühlung ohnehin nie trockenen Abgas gleichzeitig die (nicht dargestellten) Membrane der Brennstoffzelle 6 befeuchtet werden können.

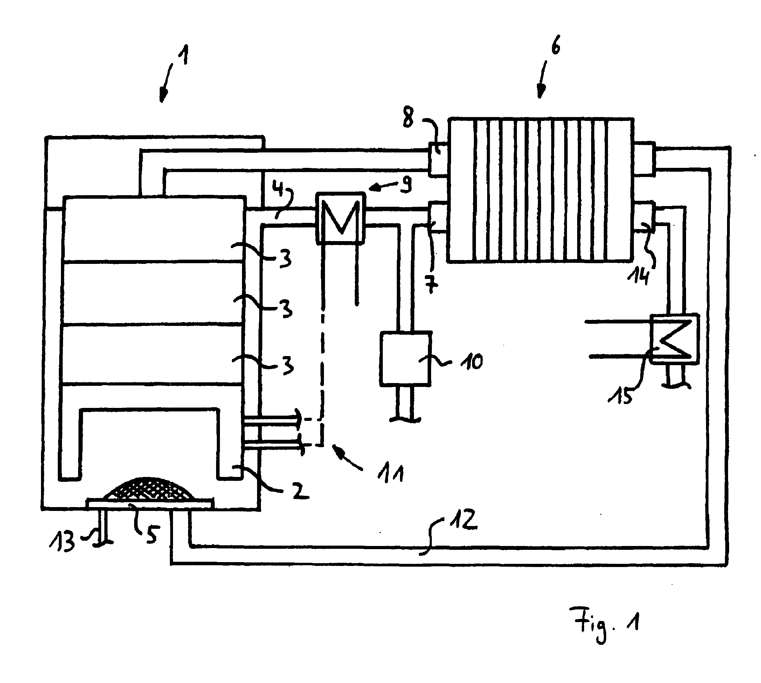

Bei der bevorzugten Ausführungsform gemäß Fig. 1 ist darüber hinaus vorteilhaft vorgesehen, dass die Abgasführung 4 zur Abgaskühlung mit einem Rauchgaswärmetauscher 9 versehen ist. Damit wird das heiße Abgas auf eine für die Brennstoffzelle 6 geeignete Temperatur im Bereich zwischen 60° und 100° C heruntergekühlt, wobei zusätzlich zur weiteren Wirkungsgradverbesserung vorteilhaft (wie gestrichelt dargestellt) vorgesehen ist, dass die dabei anfallende Abwärme zur Aufheizung der Reformer-Edukte verwendet wird. Gleiches gilt für die Wärme der am Kathodenabfuhranschluss 14 anfallenden Restluft, die mittels des Wärmetauschers 15 aus dem Abluftstrom zur weiteren Verwendung ausgekoppelt wird.

Der mit dem Gasanschluss 13 versehene Gasbrenner 5 ist im übrigen derart ausgelegt, dass mit ihm problemlos auch höhere Luftzahlen realisierbar sind, d.h. dass im Verhältnis zur zugeführten Gasmenge eine in Bezug auf die Verbrennung deutlich erhöhte Luftmenge zuführbar ist, ohne dass es zu einer negativen Beeinträchtigung der Verbrennung kommt. Vielmehr führt die Luftzahlerhöhung einfach dazu, dass im Abgas mehr unverbrauchte Luft und damit Sauerstoff und Feuchtigkeit verbleibt, die dann, wie beschrieben, beim Brennstoffzellenprozess Verwendung finden.

Um aber nicht ausschließlich auf den im Abgas enthaltenen Anteil an Restsauerstoff angewiesen zu sein, ist schließlich vorteilhaft vorgesehen, dass der zur Zufuhr von Sauerstoff vorgesehene Anschluss 7 an der PEM-Brennstoffzelle 6 neben der Verbindung zur Abgasführung 4 auch mit einer weiteren Sauerstoffquelle 10 (beispielsweise ein Gebläse, das dem Anschluss 7 und damit der PEM-Brennstoffzelle 6 Frischluft zuführt) verbunden ist, was außerdem, wie erwähnt, den Vorteil hat, dass bei Bedarf durch Zufuhr von trockener Luft der Feuchtegehalt des Abgases absenkbar ist.

Zum besseren Verständnis der Anlage sei schließlich der Stofffluss im einzelnen genauer beschrieben: Dem Reformer 1 werden die Reformer-Edukte Kohlenwasserstoffgas und Wasser über die Reformeranschlüsse 11 zugeführt. Vorzugsweise erfolgt, wie zeichnerisch angedeutet, eine Vorheizung der Edukte mittels des Rauchgaswärmetauschers 9 (und gegebenenfalls mittels des Wärmetauschers 15). Der Reformer 1 wird vom Gasbrenner 6 beheizt und wandelt die Edukte in Wasserstoff und weitere Reformer-Produkte (Kohlenmonoxid und Kohlendioxid) um. Die dem Reformer 1 nachgeschalteten Gasreinigungsstufen 3 (beispielsweise sogenannte Hoch- und Niedertemperaturshift- und SelOx-Stufe) wandeln das Kohlenmonoxid in das für die Brennstoffzelle 6 unschädliche Kohlendioxid um. Über den Anschluss 8 gelangt der aus den Reformer-Edukten erzeugte Wasserstoff zur Brennstoffzelle 6 und wird dort mit dem über den Anschluss 7 zugeführten Sauerstoff verbrannt. Wie andeutungsweise dargestellt, entsteht dabei zwischen den Polen des Stacks eine elektrische Spannung. Nicht verbrauchter Wasserstoff und im Reformer-Produkt verbliebenes Kohlenwasserstoffgas gelangt vorzugsweise über die Anodenrestgasleitung 12 zum Gasbrenner 5 zurück und wird dort verbrannt.

Vom Gasbrenner 5 bei der Verbrennung freigesetztes Abgas gelangt über die Abgasführung 4 (und vorzugsweise unter Zwischenschaltung des Rauchgaswärmetauscher 9) zum Anschluss 7, über den bei Stacks gemäß dem Stand der Technik speziell aufbereitete feuchte Luft zugeführt wird.

### Bezugszeichenliste

- 1: Apparat
- 2: Reformer
- 3: Gasfeinreinigungsstufen
- 4: Abgasführung
- 5: Gasbrenner
- 6: Brennstoffzelle
- 7: Anschluss
- 8: Anschluss
- 9: Rauchgaswärmetauscher
- 10: Sauerstoffquelle
- 11: Reformeranschlüsse
- 12: Anodenrestgasleitung
- 13: Gasanschluss
- 14: Kathodenabfuhranschluss
- 15: Wärmetauscher

## Patentansprüche

1. Brennstoffzellenanlage, umfassend
- einen Apparat (1) zur Erzeugung von Wasserstoff, der aus einem Reformer (2) zur Umwandlung von Kohlenwasserstoffgas und Wasser in Wasserstoff und weitere Reformer-Produkte mit nachgeschalteten Gasreinigungsstufen (3) besteht, wobei ein mit einer Abgasführung (4) versehener Gasbrenner (5) zur Beheizung des Reformers (2) vorgesehen ist,
- eine PEM-Brennstoffzelle (6) mit mindestens einem Anschluss (7) zur Zufuhr von Sauerstoff und mit mindestens einem Anschluss (8) zur Zufuhr des im Apparat (1) erzeugten Wasserstoffs,
**dadurch gekennzeichnet,**
**dass** die Abgasführung (4) des Gasbrenners (5) mit dem an der PEM-Brennstoffzelle (6) vorgesehenen Anschluss (7) zur Zufuhr von Sauerstoff verbunden ist.

2. Brennstoffzellenanlage nach Anspruch 1,
**dadurch gekennzeichnet,**
**dass** die Abgasführung (4) zur Abgaskühlung mit einem Rauchgaswärmetauscher (9) versehen ist.

3. Brennstoffzellenanlage nach Anspruch 1 oder 2,
**dadurch gekennzeichnet,**
**dass** der Gasbrenner (5) für einen Betrieb bei großer Luftzahl ausgelegt ist.

4. Brennstoffzellenanlage nach Anspruch 1 bis 3,
**dadurch gekennzeichnet,**
**dass** der zur Zufuhr von Sauerstoff vorgesehene Anschluss (7) an der PEM-Brennstoffzelle (6) neben der Verbindung zur Abgasführung (4) auch mit einer weiteren Sauerstoffquelle (10) verbunden ist.

5. Verfahren zum,Betrieb der Brennstoffzellenanlage nach Anspruch 1,
**dadurch gekennzeichnet,**
**dass** die Brennstoffzelle zumindest anteilig mit einer im Abgas das Gasbrenners (5) enthaltenen Restsauerstoffmenge betrieben wird.

6. Verfahren nach Anspruch 5,
**dadurch gekennzeichnet,**
**dass** die Restsauerstoffmenge im Abgas durch Luftzahlerhöhung am Gasbrenner (5) vergrößert wird.

## Claims

1. A fuel cell system, comprising
- an apparatus (1) for producing hydrogen consisting of a reformer (2) for converting hydrocarbon gas and water into hydrogen and other reformer products with downstream gas purification stages (3), wherein a gas burner (5) provided with a waste gas duct (4) is provided for heating the reformer (2),
- a PEM fuel cell (6) comprising at least one connection (7) for supplying oxygen and comprising at least one connection (8) for supplying the hydrogen produced in the apparatus (1),
**characterised in**
**that** the waste gas duct (4) of the gas burner (5) is connected to the connection (7) provided on the PEM fuel cell (6) for supplying oxygen.

2. The fuel cell system according to claim 1,
**characterised in**
**that** the waste gas duct (4) is provided with a flue gas heat exchanger (9) for cooling the waste gas.

3. The fuel cell system according to claim 1 or 2,
**characterised in**
**that** the gas burner (5) is designed for operation at a high air ratio.

4. The fuel cell system according to claim 1 to 3,
**characterised in**
**that** in addition to the connection to the waste gas duct (4), the connection (7) on the PEM fuel cell (6) provided for supplying oxygen is also connected to another oxygen source (10).

5. A method for operating the fuel cell system according to claim 1,
**characterised in**
**that** the fuel is operated at least in part with a quantity of residual oxygen contained in the waste gas of the gas burner (5).

6. The method according to claim 5,
**characterised in**
**that** the quantity of residual oxygen in the waste gas is increased by increasing the air ratio at the gas burner (5).

## Revendications

1. Système de cellule à combustible, comprenant
- un appareil (1) pour la production d'hydrogène, constitué d'un réformeur (2) pour la transformation de gaz d'hydrocarbures et d'eau en hydrogène et autres produits de réformeur, avec des sections d'épuration de gaz (3) en aval, un brûleur à gaz (5) équipé d'une conduite de gaz d'échappement (4) étant prévu pour le chauffage du réformeur (2),
- une cellule à combustible à membrane électrolyte échangeuse de protons (PEM) (6), avec au moins un raccordement (7) pour l'arrivée d'oxygène et avec au moins un raccordement (8) pour l'arrivée de l'hydrogène produit dans l'appareil (1),
**caractérisé en ce que**
la conduite de gaz d'échappement (4) du brûleur à gaz (5) est reliée au raccordement (7) prévu sur la cellule à combustible PEM (6) pour l'arrivée d'oxygène.

2. Système de cellule à combustible selon la revendication 1,
**caractérisé en ce que**
la conduite de gaz d'échappement (4) du brûleur à gaz est équipée d'un échangeur de chaleur pour gaz de combustion (9), destiné au refroidissement du gaz d'échappement.

3. Système de cellule à combustible selon la revendication 1 ou 2,
**caractérisé en ce que**
le brûleur à gaz (5) est conçu pour un fonctionnement avec un facteur d'air élevé.

4. Système de cellule à combustible selon l'une des revendications 1 à 3,
**caractérisé en ce que**
le raccordement (7) prévu pour l'alimentation en oxygène, situé sur la cellule à combustible PEM (6), est également relié à une autre source d'oxygène (10), en plus de la conduite de gaz d'échappement (4).

5. Procédé pour le fonctionnement d'un système de cellule à combustible selon la revendication 1,
**caractérisé en ce que**
la cellule à combustible fonctionne au moins partiellement avec une quantité d'oxygène résiduel contenue dans le gaz d'échappement du brûleur à gaz (5).

6. Procédé selon la revendication 5,
**caractérisé en ce que**
la quantité d'oxygène résiduel dans le gaz d'échappement est augmentée par une élévation du facteur d'air au niveau du brûleur à gaz (5).
